# EUROPEAN PATENT SPECIFICATION

(11) **EP 4 038 289 B1**
(45) Date of publication and mention of the grant of the patent: **06.09.2023**
(21) Application number: 20807494.8
(22) Date of filing: 01.10.2020
(51) Int. Cl.: F16D 27/09

(54) **ELECTROMAGNETIC GEAR COUPLING**
ELEKTROMAGNETISCHE ZAHNKUPPLUNG
ACCOUPLEMENT ÉLECTROMAGNÉTIQUE À ENGRENAGES

(30) Priority: 04.10.2019 SI 201900190
(43) Date of publication of application: 10.08.2022
(73) Proprietor: Boeli Magnetne Tehnologije, D.o.o., 2000 Maribor (SI)
(72) Inventor: BERGLEZ, Janez, 2314 Zgornja Polskava (SI); BERGLEZ, Sasa, 2000 Maribor (SI)
(74) Representative: Sveticic, Andrej
(86) International application number: PCT/IB2020/059230
(87) International publication number: WO 2021/064646

(56) References cited:
- GB-A- 842 395
- SU-A2- 842 283
- US-A- 2 724 474
- US-A- 2 942 710

## Description

### Field of Invention

The invention relates to an electromagnetic gear coupling, in particular for large drives such as ship drives or machine drives in ironworks.

### Prior art

Electromagnetic couplings transmit torque mechanically but are activated electrically. Basically, electromagnetic couplings are of two types. In the first type, the torque is transmitted when the electromagnet is electrically excited, and in the second type, the torque is transmitted when the electrical excitation of the electromagnet is interrupted. Electromagnetic gear couplings are suitable for transmitting large torques that occur e.g. in ship drives, at relatively low speeds. A crown gear electromagnetic coupling disclosed in U.S. Patent Application 2011/0290055 A1 is known from prior art. In this coupling, the torque is transmitted when the electromagnet is electrically excited. When the excitation of the electromagnet ceases, the spring separates the crown gears from each other and the torque ceases to be transmitted. The coupling comprises an electromagnetic winding arranged within a housing, on which the first crown gear is mounted. The electromagnet can attract a second crown gear that is prestressed by a spring by pushing the crown gears one from the other when the electromagnet is not electrically excited. When one or both crown gears are damaged when using the coupling, the drive must be dismantled and the entire coupling disassembled so that the damaged crown gear can be replaced. This is time consuming, and in the case of large drives also physically demanding and strenuous.

Document US 2 724 474 A discloses a magnetic clutch comprising driving and driven coupling members rotatable about a common axis, an electromagnet having a body element drivingly attached to one of said members and an annular coil secured to said element, an armature having a mounting element drivingly attached to the other of said members. The armature is movable away from its supporting element and toward said electro-magnet when the latter is energized and has thereon an annular series of parallel peripheral external gear teeth. A ring gear surrounds said armature and has an annular series of internal gear teeth co-acting with said external armature teeth and is detachably secured to one of said elements, wherein an annular series of helical compression springs is interposed between said coil and said armature.

Document GB 842 395 A discloses a positive clutch or detent for the engagement of two relatively rotatable members comprises dog teeth on the members respectively which are adapted to be engaged by axial movement of member on energization of a magnet coil on member or, alternatively, by some fluid-pressure device. Engagement other than in one or a predetermined number of relative positions of the members is prevented by a number of unequally spaced pins on member co-operating with corresponding holes or recesses in the member. The holes are somewhat elongated so that after the pins 6 engage therewith a small amount of relative turning between members is permitted to facilitate the tooth engagement. Automatic engagement and disengagement may be provided by a driven star wheel or cam disc actuating a switch for the coil. The teeth may be replaced by lugs or claws and a friction synchronizing ring may be arranged between the two members.

Document US 2 942 710 A discloses a clutch device comprising a first and second clutch member connectible to a driving end driven member respectively. Said first and second clutch members have clutch surfaces movable into and out of engagement with one another for operatively connecting and disconnecting respectively said driving and driven members. It further comprises an electromagnetic energizing means for creating a magnetic field linking at least a portion of said first and second clutch members; wherein said first and second clutch members are moved into engagement with one another responsive to energization of said electromagnetic energizing means.

One of said clutch surfaces is at least partially comprised of an elastic medium and the other is comprised of non-elastic medium; wherein said elastic medium has a high permeability and at least a portion of said magnetic field passes through said elastic medium.

Document SU 842 283 A2 discloses a clutch consisting of steel rims with end teeth, fixed on the body by means of radial cylindrical elastic elements, and on the armature by means of solid non-magnetic pins, non-magnetic spacers and return springs. The body is made with a collar serving as a stop for the ring gear with a non-magnetic spacer. The gap between the end of the non-magnetic spacer and the end of the shoulder of the housing has a strictly fixed width, which is ensured during installation, for example, using temporary spacers.

### Technical problem

The technical problem is how to provide an electromagnetic gear coupling, especially for large drives, which will allow its quick and easy replacement in the event of damage to the crown gear.

### Solution to the technical problem

The technical problem is solved with an electromagnetic gear coupling, in particular for ship drives, comprising:
- a first part connectable to a drive/output shaft and which comprises an electromagnet holder and an electromagnet which can be electrically excited,
- a first crown gear that is detachably connected to the first part,
- a second part acting as an anchor, connectable to the output/drive shaft, and
- a second crown gear that is detachably connected to the second part in such a way to engage in a positive locking manner the first crown gear to transmit torque,
- the first and/or second part being formed of at least two pieces which are movably arranged relative to each other in axial direction of the coupling by an intermediate arrangement of a spring means,

the electromagnetic gear coupling transmitting torque from the first to the second part when the electromagnet is electrically excited,
wherein the first and/or second crown gears are divided into n segments and have a number of teeth that is an integer multiple of n, wherein n ≥ 2, preferably n ≥ 3, and
wherein the first and/or second crown gears are connected with the first and the second part, respectively, with fastening means arranged in the radial direction of each crown gear.

Alternatively, the technical problem is solved with an electromagnetic gear coupling, in particular for ship drives, comprising:
- a first part formed in the form of a hub connectable to a drive/output shaft,
- a first crown gear that is detachably connected to the first part,
- a second part connectable to an output/drive shaft and which comprises an anchor, and an electromagnet holder with an electromagnet which can be electrically excited, a second crown gear that is detachably connected to the second part in such a way to engage in a positive locking manner the first crown gear to transmit torque,
- the anchor and the electromagnet holder being movably arranged relative to each other in axial direction of the coupling by an intermediate arrangement of a spring means,

the transmission of the torque from the first to the second part being interrupted when the electromagnet is electrically excited,
wherein the first and/or second crown gears are divided into n segments and have a number of teeth that is an integer multiple of n, wherein n ≥ 2, preferably n ≥ 3, and wherein the first and/or second crown gears are connected with the first and the second part, respectively, with fastening means arranged in the radial direction of each crown gear.

In the event of damage to the crown gear, the fastening means of the crown gear and individual damaged segments of the crown gear are removed in the radial direction and replaced with new ones.

The advantage of the electromagnetic gear coupling according to the invention over known couplings is that in the event of damage to the crown gear, it is not necessary to dismantle the drive and disassemble the entire coupling, which facilitates work and allows quick replacement of a damaged crown gear with a new one.
Figure 1: Electromagnetic gear coupling transmitting torque according to a first embodiment when the electromagnet is electrically excited
Figure 2: Electromagnetic gear coupling transmitting torque according to a second embodiment when the electromagnet is not electrically excited
Figure 3: A perspective view of a crown gear segment The invention is described in more detail in the following by way of various embodiments.

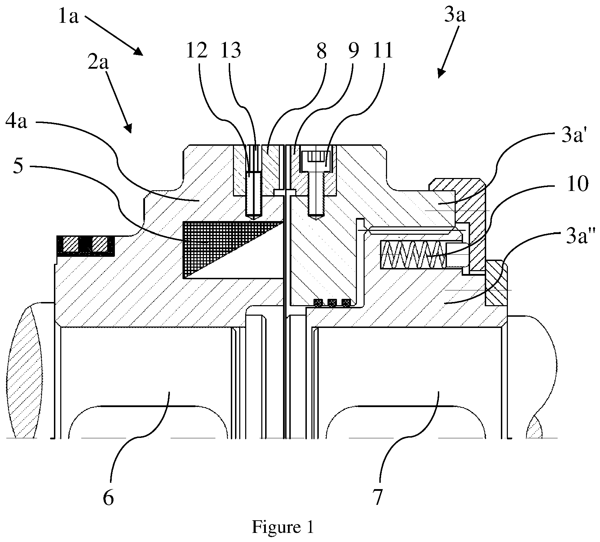

In the first embodiment of figure 1 there is provided an electromagnetic gear coupling 1a, in particular for ship drives, comprising:
- a first part 2a connectable to a drive/output shaft 6 and which comprises an electromagnet holder 4a and an electromagnet 5 which can be electrically excited,
- a first crown gear 8 that is detachably connected to the first part 2a,
- a second part 3a acting as an anchor, connectable to the output/drive shaft 7, and
- a second crown gear 9 that is detachably connected to the second part 3a in such a way to engage in a positive locking manner the first crown gear 8 to transmit torque,
- the first and/or second part 3a being formed of at least two pieces 3a', 3a" which are movably arranged relative to each other in axial direction of the coupling by an intermediate arrangement of a spring means 10,

the electromagnetic gear coupling 1a transmitting torque from the first to the second part when the electromagnet is electrically excited,
wherein the first 8 and/or second 9 crown gears are divided into n segments and have a number of teeth that is an integer multiple of n, wherein n ≥ 2, preferably n ≥ 3, and wherein the first and/or second crown gears are connected with the first and the second part, respectively, with fastening means 11 arranged in the radial direction of each crown gear.

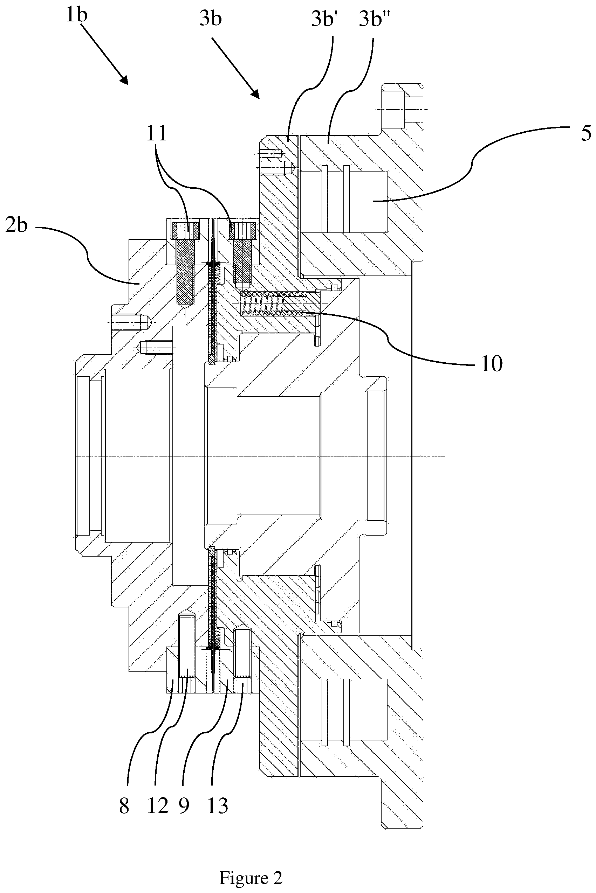

In the second embodiment of figure 2 there is provided an electromagnetic gear coupling 1b, in particular for ship drives, comprising:
- a first part 2b formed in the form of a hub connectable to a drive/output shaft,
- a first crown gear 8 that is detachably connected to the first part 2b,
- a second part 3b connectable to an output/drive shaft and which comprises an anchor 3b', and an electromagnet holder 3b" with an electromagnet 5 which can be electrically excited,
- a second crown gear 9 that is detachably connected to the second part 3b in such a way to engage in a positive locking manner the first crown gear 8 to transmit torque,
- the anchor 3b' and the electromagnet holder 3b" being movably arranged relative to each other in axial direction of the coupling by an intermediate arrangement of a spring means 10,

the transmission of the torque from the first 2b to the second 3b part being interrupted when the electromagnet is electrically excited,
wherein the first and/or second crown gears are divided into n segments and have a number of teeth that is an integer multiple of n, wherein n ≥ 2, preferably n ≥ 3, and
wherein the first and/or second crown gears are connected with the first and the second part, respectively, with fastening means 11 arranged in the radial direction of each crown gear.

The first 8 and/or second 9 crown gears are divided into segments in the area of the space between the teeth.

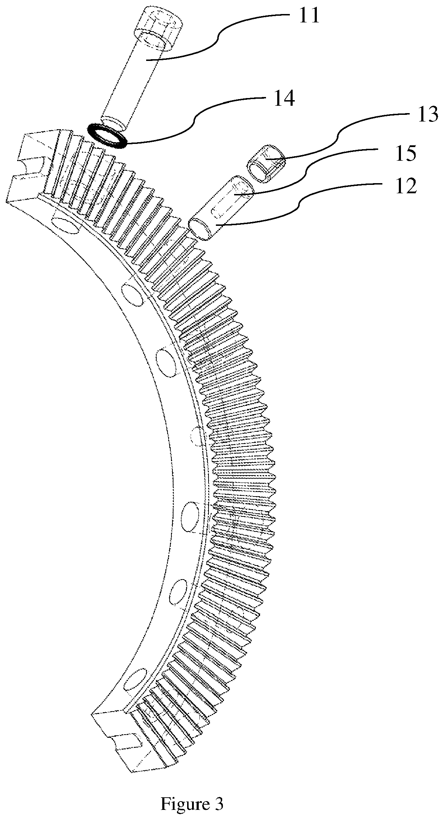

The fastening means of a segment (cf. figure 3) are formed by screws, preferably hexagon socket head cap screws 11, and washers 14. Each segment is tightened with at least 4 screws.

Between the adjacent screws, in the radial direction of each crown gear, a cylindrical pin 12 is arranged so that it extends through the crown gear to the depth of the first and second part of the coupling, respectively. Each segment is provided with at least two cylindrical pins. The cylindrical pin serves to better position the segment of the crown gear on the first and the second part of the coupling, respectively, and safer operation during the operation of the coupling, as the torque can be transmitted from a part of the coupling via the crown gear even in the event of screws falling out. Each cylindrical pin is secured against falling out by a spring pin 13. The cylindrical pin is preferably formed by a threaded borehole 15 in the axial direction of the cylindrical pin. The purpose of the threaded borehole is to screw in the screw when removing the crown gear, by means of which the cylindrical pin together with the spring pin is pulled out of the hole.

The first and second crown gears 8, 9 are fitted with a Hirth joint.

The first and second crown gears are made of steel or bronze.

## Claims

1. An electromagnetic gear coupling (1a), in particular for ship drives, comprising:
- a first part (2a) connectable to a drive/output shaft (6) and which comprises an electromagnet holder (4a) and an electromagnet (5) which can be electrically excited,
- a first crown gear (8) that is detachably connected to the first part (2a),
- a second part (3a) acting as an anchor, connectable to the output/drive shaft (7), and
- a second crown gear (9) that is detachably connected to the second part (3a) in such a way to engage in a positive locking manner the first crown gear (8) to transmit torque,
- the first and/or second part (3a) being formed of at least two pieces (3a', 3a") which are movably arranged relative to each other in axial direction of the coupling by an intermediate arrangement of a spring means (10),
the electromagnetic gear coupling (1a) transmitting torque from the first to the second part when the electromagnet is electrically excited,
**characterized in that** the first (8) and/or second (9) crown gears are divided into n segments and have a number of teeth that is an integer multiple of n, wherein n ≥ 2, preferably n ≥ 3, and wherein the first and/or second crown gears are connected with the first and the second part, respectively, with fastening means (11) arranged in the radial direction of each crown gear.

2. An electromagnetic gear coupling (1b), in particular for ship drives, comprising:
- a first part (2b) formed in the form of a hub connectable to a drive/output shaft,
- a first crown gear (8) that is detachably connected to the first part (2b),
- a second part (3b) connectable to an output/drive shaft and which comprises an anchor (3b'), and an electromagnet holder (3b") with an electromagnet (5) which can be electrically excited,
- a second crown gear (9) that is detachably connected to the second part (3b) in such a way to engage in a positive locking manner the first crown gear (8) to transmit torque,
- the anchor (3b') and the electromagnet holder (3b") being movably arranged relative to each other in axial direction of the coupling by an intermediate arrangement of a spring means (10),
the transmission of the torque from the first (2b) to the second (3b) part being interrupted when the electromagnet is electrically excited,
**characterized in that** the first (8) and/or second (9) crown gears are divided into n segments and have a number of teeth that is an integer multiple of n, wherein n ≥ 2, preferably n ≥ 3, and wherein the first and/or second crown gears are connected with the first and the second part, respectively, with fastening means (11) arranged in the radial direction of each crown gear.

3. The electromagnetic gear coupling according to any of preceding claims, **characterized in that** the first (8) and/or second (9) crown gears are divided into segments in the area of the space between the teeth.

4. The electromagnetic gear coupling according to any of preceding claims, **characterized in that** the fastening means are formed by screws, preferably hexagon socket head cap screws (11) and washers (14).

5. The electromagnetic gear coupling according to claim 4, **characterized in that** each segment is tightened by at least four screws.

6. The electromagnetic gear coupling according to claim 4 or 5, **characterized in that** between the adjacent screws, in the radial direction of each crown gear, a cylindrical pin (12) is arranged so that it extends through the crown gear to the depth of the first and second part of the coupling, respectively.

7. The electromagnetic gear coupling according to any of preceding claims, **characterized in that** each segment is provided with at least two cylindrical pins (12).

8. The electromagnetic gear coupling according to claim 7, **characterized in that** each cylindrical pin (12) is secured against falling out by a spring pin (13).

9. The electromagnetic gear coupling according to claim 7 or 8, **characterized in that** the cylindrical pin is formed by a threaded borehole (15) in the axial direction of the cylindrical pin.

10. The electromagnetic gear coupling according to any of preceding claims, **characterized in that** the first and second crown gears (8, 9) are fitted with a Hirth joint.

11. The electromagnetic gear coupling according to any of preceding claims, **characterized in that** the first and second crown gears (8, 9) are made of steel or bronze.

## Patentansprüche

1. Elektromagnetische Zahnkupplung (1a), insbesondere für Schiffsantriebe, umfassend:
- einen ersten Teil (2a), der mit einer Antriebs-/Abtriebswelle (6) verbindbar ist und der einen Elektromagnethalter (4a) und einen Elektromagneten (5) umfasst, der elektrisch erregt werden kann,
- einen ersten Zahnkranz (8), der lösbar mit dem ersten Teil (2a) verbunden ist,
- ein zweites Teil (3a), das als Anker dient und mit der Abtriebs-/Antriebswelle (7) verbindbar ist, und
- einen zweiten Zahnkranz (9), der lösbar mit dem zweiten Teil (3a) so verbunden ist, dass er formschlüssig in den ersten Zahnkranz (8) eingreift, um ein Drehmoment zu übertragen,
- wobei der erste und/oder zweite Teil (3a) aus mindestens zwei Teilen (3a', 3a") gebildet sind, die durch eine Zwischenanordnung eines Federmittels (10) in axialer Richtung der Kupplung relativ zueinander bewegbar angeordnet sind,
die elektromagnetische Zahnkupplung (1a) ein Drehmoment vom ersten auf den zweiten Teil überträgt, wenn der Elektromagnet elektrisch erregt wird,
**dadurch gekennzeichnet, dass** der erste (8) und/oder zweite (9) Zahnkranz in n Segmente unterteilt ist und eine Anzahl von Zähnen aufweist, die ein ganzzahliges Vielfaches von n ist, wobei n ≥ 2, vorzugsweise n ≥ 3 ist, und wobei der erste und/oder zweite Zahnkranz mit dem ersten bzw. zweiten Teil mit Befestigungsmitteln (11) verbunden sind, die in der radialen Richtung jedes Zahnkranzes angeordnet sind.

2. Elektromagnetische Zahnkupplung (1b), insbesondere für Schiffsantriebe, umfassend:
- einen ersten Teil (2b) in Form einer Nabe, die mit einer Antriebs-/Abtriebswelle verbindbar ist,
- einen ersten Zahnkranz (8), der lösbar mit dem ersten Teil (2b) verbunden ist,
- einen zweiten Teil (3b), der mit einer Abtriebs-/Antriebswelle verbindbar ist und einen Anker (3b') umfasst, und einen Elektromagnethalter (3b") mit einem Elektromagneten (5), der elektrisch erregt werden kann,
- einen zweiten Zahnkranz (9), der lösbar mit dem zweiten Teil (3b) so verbunden ist, dass er formschlüssig in den ersten Zahnkranz (8) eingreift, um ein Drehmoment zu übertragen,
- wobei der Anker (3b') und der Elektromagnethalter (3b") durch eine Zwischenanordnung eines Federmittels (10) relativ zueinander in axialer Richtung der Kupplung bewegbar angeordnet sind,
wobei die Übertragung des Drehmoments vom ersten (2b) auf den zweiten (3b) Teil unterbrochen wird, wenn der Elektromagnet elektrisch erregt wird,
**dadurch gekennzeichnet, dass** der erste (8) und/oder zweite (9) Zahnkranz in n Segmente unterteilt ist und eine Anzahl von Zähnen aufweist, die ein ganzzahliges Vielfaches von n ist, wobei n ≥ 2, vorzugsweise n ≥ 3 ist, und wobei der erste und/oder zweite Zahnkranz mit dem ersten bzw. zweiten Teil mit Befestigungsmitteln (11) verbunden sind, die in der radialen Richtung jedes Zahnkranzes angeordnet sind.

3. Elektromagnetische Zahnkupplung gemäß einem der vorhergehenden Ansprüche, **dadurch gekennzeichnet, dass** der erste (8) und/oder zweite (9) Zahnkranz im Bereich des Zahnzwischenraums in Segmente unterteilt ist.

4. Elektromagnetische Zahnkupplung gemäß einem der vorhergehenden Ansprüche, **dadurch gekennzeichnet, dass** die Befestigungsmittel durch Schrauben, vorzugsweise Innensechskantschrauben (11), und Unterlegscheiben (14), gebildet werden.

5. Elektromagnetische Zahnkupplung gemäß Anspruch 4, **dadurch gekennzeichnet, dass** jedes Segment durch mindestens vier Schrauben festgezogen wird.

6. Elektromagnetische Zahnkupplung gemäß Anspruch 4 oder 5, **dadurch gekennzeichnet, dass** zwischen den benachbarten Schrauben in radialer Richtung jedes Zahnkranzes ein zylindrischer Stift (12) so angeordnet ist, dass er sich durch den Zahnkranz bis in die Tiefe des ersten bzw. zweiten Teils der Kupplung erstreckt.

7. Elektromagnetische Zahnkupplung gemäß einem der vorhergehenden Ansprüche, **dadurch gekennzeichnet, dass** jedes Segment mit mindestens zwei zylindrischen Stiften (12) versehen ist.

8. Elektromagnetische Zahnkupplung gemäß Anspruch 7, **dadurch gekennzeichnet, dass** jeder Zylinderstift (12) durch einen Federstift (13) gegen Herausfallen gesichert ist.

9. Elektromagnetische Zahnkupplung gemäß Anspruch 7 oder 8, **dadurch gekennzeichnet, dass** der zylindrische Stift durch eine Gewindebohrung (15) in axialer Richtung des zylindrischen Stiftes gebildet ist.

10. Elektromagnetische Zahnkupplung gemäß einem der vorhergehenden Ansprüche, **dadurch gekennzeichnet, dass** der erste und der zweite Zahnkranz (8, 9) mit einer Hirth-Verzahnung versehen sind.

11. Elektromagnetische Zahnkupplung gemäß einem der vorhergehenden Ansprüche, **dadurch gekennzeichnet, dass** der erste und der zweite Zahnkranz (8, 9) aus Stahl oder Bronze hergestellt sind.

## Revendications

1. Accouplement d'engrenage électromagnétique (1a), en particulier pour transmissions de navire, comprenant :
- une première partie (2a) pouvant être reliée à un arbre d'entraînement/de sortie (6) et qui comprend un porte-électroaimant (4a) et un électroaimant (5) qui peut être électriquement excité,
- une première couronne d'engrenage (8) qui est reliée, de façon séparable, à la première partie (2a),
- une seconde partie (3a) servant d'ancrage, pouvant être reliée à l'arbre de sortie/d'entraînement (7), et
- une seconde couronne d'engrenage (9) qui est reliée, de façon séparable, à la seconde partie (3a) de manière telle à entrer en prise, par verrouillage positif, avec la première couronne d'engrenage (8) pour transmettre un couple,
- la première et/ou la seconde (3a) parties étant formées d'au moins deux pièces (3a', 3a'') qui sont agencées de façon mobile l'une relativement à l'autre en direction axiale de l'accouplement, par un agencement intermédiaire d'un moyen à ressort (10),
l'accouplement d'engrenage électromagnétique (1a) transmettant un couple depuis la première à la seconde partie lorsque l'électroaimant est électriquement excité,
**caractérisé en ce que** les première (8) et/ou seconde (9) couronnes d'engrenage sont divisées en n segments et ont un nombre de dents qui est un nombre entier relatif multiple de n, dans lequel n ≥ 2, de préférence n ≥ 3, et dans lequel les première et/ou seconde couronnes d'engrenage sont reliées à la première et à la seconde parties, respectivement, avec des moyens de fixation (11) agencés dans la direction radiale de chaque couronne d'engrenage.

2. Accouplement d'engrenage électromagnétique (1b), en particulier pour entraînements de navire, comprenant :
- une première partie (2b), sous la forme d'un moyeu, pouvant être reliée à un arbre d'entraînement/de sortie,
- une première couronne d'engrenage (8) qui est reliée, de façon séparable, à la première partie (2b),
- une seconde partie (3b) pouvant être reliée à un arbre de sortie/d'entraînement et qui comprend un ancrage (3b'), et un porte-électroaimant (3b'') avec un électroaimant (5) qui peut être électriquement excité,
- une seconde couronne d'engrenage (9) qui est reliée, de façon séparable, à la seconde partie (3b) de manière telle à entrer en prise, par verrouillage positif, avec la première couronne d'engrenage (8) pour transmettre un couple,
- l'ancrage (3b') et le porte-électroaimant (3bʺ) étant agencés de façon mobile l'un relativement à l'autre en direction axiale de l'accouplement, par un agencement intermédiaire d'un moyen à ressort (10),
la transmission du couple depuis la première (2b) à la seconde (3b) partie étant interrompue lorsque l'électroaimant est électriquement excité,
**caractérisé en ce que** la première (8) et/ou la seconde (9) couronnes d'engrenage sont divisées en n segments et ont un nombre de dents qui est un nombre entier relatif multiple de n, dans lequel n ≥ 2, de préférence n ≥ 3, et dans lequel la première et/ou la seconde couronnes d'engrenage sont reliées à la première et à la seconde parties, respectivement, avec des moyens de fixation (11) agencés dans la direction radiale de chaque couronne d'engrenage.

3. Accouplement d'engrenage électromagnétique selon l'une quelconque des revendications précédentes, **caractérisé en ce que** la première (8) et/ou la seconde (9) couronnes d'engrenage sont divisées en segments dans la zone de l'espace entre les dents.

4. Accouplement d'engrenage électromagnétique selon l'une quelconque des revendications précédentes, **caractérisé en ce que** les moyens de fixation sont formés par des vis, de préférence des vis empreinte hexagonale (11) et des rondelles (14).

5. Accouplement d'engrenage électromagnétique selon la revendication 4, **caractérisé en ce que** chaque segment est serré par au moins quatre vis.

6. Accouplement d'engrenage électromagnétique selon la revendication 4 ou 5, **caractérisé en ce que**, entre les vis adjacentes, dans la direction radiale de chaque couronne d'engrenage, une goupille cylindrique (12) est agencée pour qu'elle s'étende à travers la couronne d'engrenage jusqu'à la profondeur des première et seconde parties de l'accouplement, respectivement.

7. Accouplement d'engrenage électromagnétique selon l'une quelconque des revendications précédentes, **caractérisé en ce que** chaque segment est pourvu d'au moins deux goupilles cylindriques (12).

8. Accouplement d'engrenage électromagnétique selon la revendication 7, **caractérisé en ce que** chaque goupille cylindrique (12) est fixée, pour ne pas se défaire, par une goupille à ressort (13).

9. Accouplement d'engrenage électromagnétique selon la revendication 7 ou 8, **caractérisé en ce que** la goupille cylindrique est formée par un alésage fileté (15) dans la direction axiale de la goupille cylindrique.

10. Accouplement d'engrenage électromagnétique selon l'une quelconque des revendications précédentes, **caractérisé en ce que** les première et seconde couronnes d'engrenage (8, 9) sont équipées d'un joint Hirth.

11. Accouplement d'engrenage électromagnétique selon l'une quelconque des revendications précédentes, **caractérisé en ce que** les première et seconde couronnes d'engrenage (8, 9) sont faites d'acier ou de bronze.
